**Europäisches Patentamt**

**European Patent Office**

**Office européen des brevets**

(19)

(11) Publication number: **0 109 972**
**A1**

(12) # EUROPEAN PATENT APPLICATION

(21) Application number: **82111040.0**

(22) Date of filing: **30.11.82**

(51) Int. Cl.³: **G 02 B 7/26**

(43) Date of publication of application: **13.06.84**
**Bulletin 84/24**

(84) Designated Contracting States: **DE FR GB IT**

(71) Applicant: **SHOWA ELECTRIC WIRE & CABLE CO.,LTD.,
2-1-1 Odasakae, Kawasaki-ku, Kawasaki-shi,
Kanagawa-ken (JP)**

(72) Inventor: **Kowata, Nobuo, 7-4-15 Sagamihara,
Sagamihara-shi Kanagawa-ken (JP)**

(74) Representative: **Zipse + Habersack,
Kemnatenstrasse 49, D-8000 München 19 (DE)**

(54) Optical fiber junction device.

(57) An optical fiber junction device has a pair of optical fibers (16a, 17a; 16b, 17b; 16c) fused at side faces to each other and having a combined end (18), and another optical fiber (16, 17) and having an end having an outside diameter which is substantially the same as that of the combined end and joined to the latter. The pair of optical fibers fused together has a constricted portion (14) adjacent to the combined end and having an outside diameter smaller than that of the combined end. The pair of optical fibers may have different outside diameters, and one of the optical fibers which is of a smaller outside diameter has a portion from which the cladding material is removed and which is joined by fusion to the other optical fiber having a larger outside diameter.

TITLE OF THE INVENTION

OPTICAL FIBER JUNCTION DEVICE

BACKGROUND OF THE INVENTION

This invention relates to optical junction devices for joining optical fibers, and it is primarily concerned with the dividing and/or combining of light propagating in optical fibers for effecting a distribution of light between a number of discrete paths or collection of light from multiple paths into a single path.

One known optical fiber junction device includes a pair of optical fibers fused sideways and another optical fiber fused endwise to the fused pair of optical fibers, there being a central cladding layer in the fused pair of optical fibers. Since light propagation is at maximum at the center of the core of the optical fiber, a large amount of light enters the central cladding layer thus increasing insertion loss by the optical fiber junction device.

SUMMARY OF THE INVENTION

The above-described drawbacks in the prior art apparatus have been successfuly eliminated by the present invention.

It is an object of the present invention to provide an improved optical fiber junction device for thereby reducing transmission loss.

- 1 -

According to the present invention, the above object can be achieved by an optical fiber junction device comprising at least a pair of optical fibers fused at side faces to each other and having a combined end, and at least one other optical fiber and having an end having an outside diameter which is substantially the same as that of the combined end and joined to the latter, the at least pair of optical fibers fused together having a constricted portion adjacent to the combined end and having an outside diameter smaller than that of the combined end.

So, light propagating in a central cladding layer will be refracted at the constricted portion into cores for thereby reducing transmission loss.

According to another embodiment, the at least pair of optical fibers have different outside diameters, and one of the optical fibers which is of a smaller outside diameter has a portion from which the cladding material is removed and which is joined by fusion to the other optical fiber having a larger outside diameter.

These and other objects of the invention will become apparent from the following description of embodiments thereof when taken together with the drawings.

BRIEF DESCRIPTION OF THE DRAWINGS

Fig. 1 is a longitudinal cross-sectional view of a conventional optical fiber junction device;

Figs. 2A, 2B and 2C are transverse cross-sectional views taken along lines A - A, B - B and C - C, respectively, of Fig. 1;

Fig. 3 is a longitudinal cross-sectional view of an optical fiber junction device according to an embodiment of the

- 2 -

0109972

present invention;

Figs. 4A, 4B, 4C, 4D and 4E are transverse cross-sectional views taken along lines A - A, B - B, C - C, D - D and E - E, respectively, of Fig. 3;

Fig. 5 is an enlarged fragmentary longitudinal cross-sectional view of the optical fiber junction device shown in Fig. 3;

Fig. 6 is a longitudinal cross-sectional view of an optical fiber junction device according to another embodiment of the present invention;

Fig. 7 is a transverse cross-sectional view taken along line A - A of Fig. 6; and

Fig. 8 is a graph showing characteristic data experimentally obtained of the optical fiber junction devices according to the embodiments of the present invention.

## DETAILED DESCRIPTION OF THE PREFERRED EMBODIMENTS

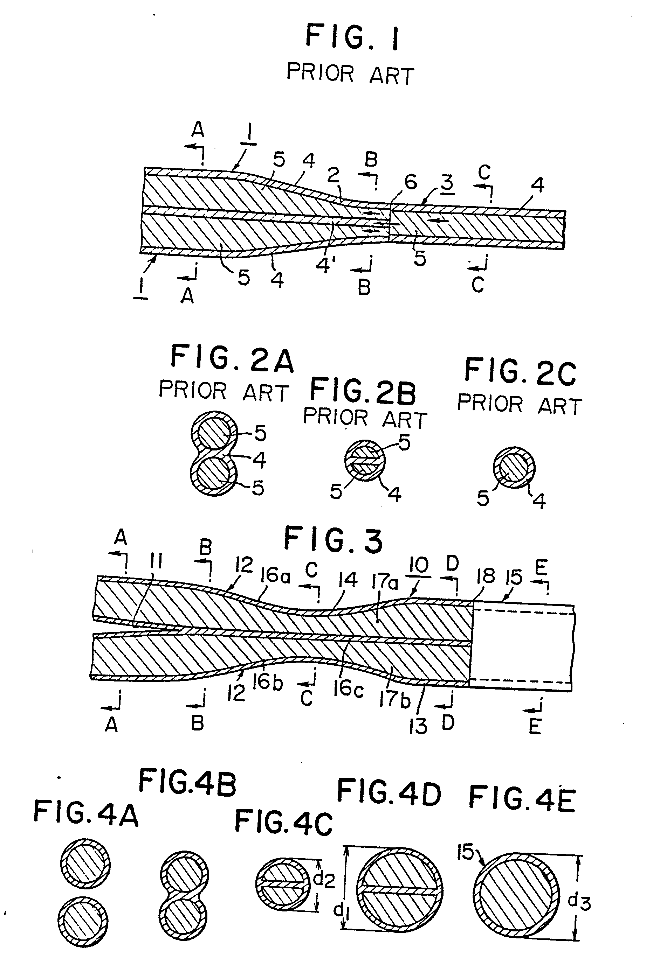

As shown in Fig. 1, it has been conventional practice to fabricate an optical fiber junction device by joining by fusion side faces of optical fibers 1, 1 to each other and elongating an end 2 to reduce the diameter thereof into conformity with an outside diameter of a cladding layer 4 of an optical fiber 3 to which the optical fibers 1, 1 are to be spliced. Then, the end faces of the optical fibers to be joined are fused together according to a process as described in U. S. Patent No. 4,083,625 issued to Hudson on April 11, 1978.

The optical fiber junction device thus constructed is however disadvantageous for the following reasons: As

- 3 -

illustrated in Figs. 2A, 2B and 2C, the cores and cladding layers of the optical fibers 1, 3 have different cross-sectional shapes. More specifically, the core 5 of a circular cross section is joined at a juction 6 to the cores 5, 5 of a semicircular cross section. Light propagating in the optical fiber 3 in the direction of the arrow (Fig. 1) enters through the juntion 6 into the semicircular cores 5, 5 and also into a central cladding layer 4'.

Light propagation in an optical fiber is normally at maximum at the center of the optical fiber. Therefore, a large amount of light enters the central cladding layer at the junction 6, resulting in an increased insertion loss in the optical fiber junction device.

Preferred embodiments of the present invention will now be described with reference to the drawings.

As shown in Figs. 3 and 4A through 4E, an optical fiber junction device 10 according to the present invention comprises at least a pair of optical fibers 12, 12 having side faces fused together to provide a branch 11 and a combined end 13, the fused optical fibers 12, 12 including a constricted portion 14 adjacent to the combined end 13 and having an outside diameter $d_2$ smaller than an outside diameter $d_1$ of the end 13.

At least one other optical fiber 15 includes a core having a circular cross section and is fused endwise to the end 13 of the fused optical fibers 12, 12, the optical fiber 15 having an outside diameter $d_3$ which is substantially the same as the outside diameter $d_1$ of the end 13.

- 4 -

The optical fiber junction device 10 may be fabricated by a process described below.

A single optical fiber 12 is treated with hydrofluoric acid so that it will have a progressively tapered end portion with the reduced diameter thereof being constant over a certain distance from the distal end. A pair of such optical fibers 12, 12 thus processed are brought into contact with each other along side faces thereof for a certain interval, and then heated to fuse them together. While the optical fibers 12, 12 remain soft in the fusing process, they are pulled axially in opposite directions to form a constricted portion 14 in the vicinity of the end 13.

An optical fiber 15 to be spliced is also treated with hydrofluoric acid to narrow its end portion until it will have an outside diameter substantially equal to that of the end 13 of the fused optical fibers 12, 12. More specifically, such diameter equalization is effected in reality by measuring the outside diameter of the end 13 of the fused optical fibers 12, 12 in advance, successively measuring the outside diameter of the other optical fiber 15 to be joined, and cutting off the optical fiber 15 at a portion which is equal in outside diameter to the end 13. Then, the optical fibers 12, 15 are joined by fusion end to end. With such a process, the optical fibers can be spliced through a smooth junction having no abrupt step or surface interruption, for thereby reducing light transmission loss.

Accordingly, the optical fiber junction device with low transmission loss can be fabricated by forming the constricted portion 14 in the vicinity of the end 13 of the fused optical fibers 12, 12 and joining the straight optical fiber 15 endwise.

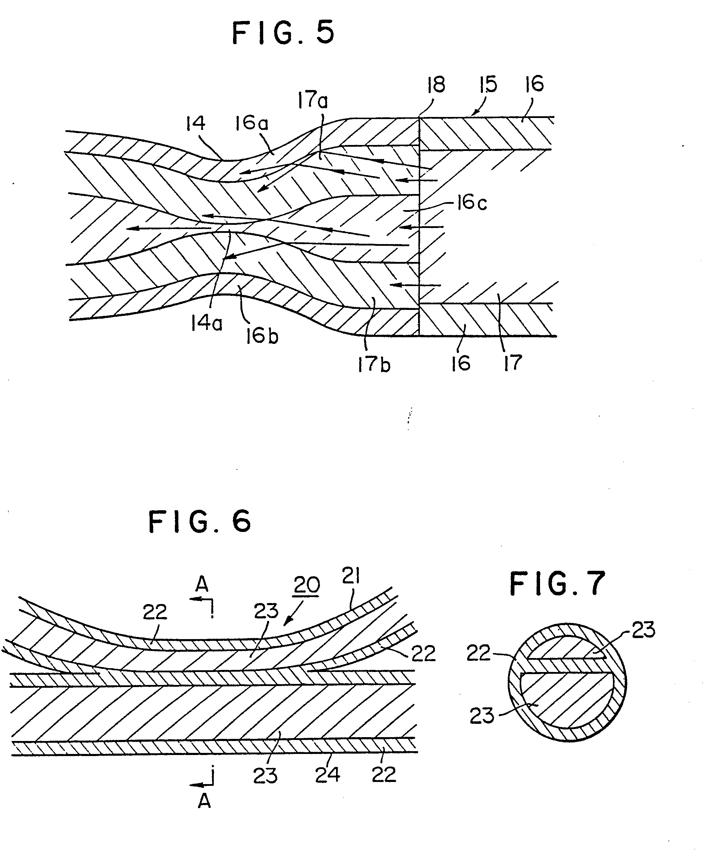

Reasons for reducing transmission loss will be described with reference to Fig. 5. Light propagating in a central core 17 surrounded by a cladding layer 16 of the optical fiber 15 enters cores 17a, 17b of the optical fibers 12, 12, respectively, joined by a junction 18 endwise to the optical fiber 15. Light also enters from the core 17 into a central cladding layer 16c, the amount of light going into the central cladding layer 16c being greater than that travelling in the cores 17a, 17b as ligh distribution is at maximum at the center of the core 17 of the optical fiber 15.

The constricted portion 14 adjacent to the end 13 of the optical fiber 12 provides a constricted portion 14a in the central cladding layer 16c. Light propagating in the central cladding layer 16c is refracted by interfaces between the central cladding layer 16c and the cores 17a, 17b at the constricted portion 14a back into the cores 17a, 17b, and is caused to propagate therein. Therefore, light transmission loss by the optical fiber junction device 10 can be reduced.

Since the cores 17a, 17b have a refractive index higher than that of the cladding layers 16a, 16b, any leakage of light from the cores 17a, 17b into the cladding layers 16a, 16b is negligibly small. With the cladding layers 16a, 16b becoming progressively greater in outside diameter beyond the constricted portion 14, light can easily find its way into the cores 17a, 17b.

Figs. 6 and 7 are illustrative of an optical fiber junction device 20 according to another embodiment of the present invention. The optical fiber 20 can be constructed by the following process: A curved optical fiber 21 of a small diameter is treated at its convex outer face with hydrofluoric acid to remove a portion of cladding material 22. Then, the cladding-free side face of the curved optical fiber 21 is held against a side face of a straight optical fiber 24 having a larger diameter, and is fused thereto.

The smaller-diameter optical fiber 21 can thus be securely joined to the larger-diameter optical fiber 24. The junction is cut off along line A - A (Fig. 6), and one severed end is fused to the end of an optical fiber 15 as according to the previous embodiment shown in Fig. 3. Thereafter, a constricted portion 14 is formed in the fused optical fibers 21, 24. The resulting optical fiber junction device is as effective to cause light propagating in a cladding layer 22 to enter cores 23 at the constricted portion.

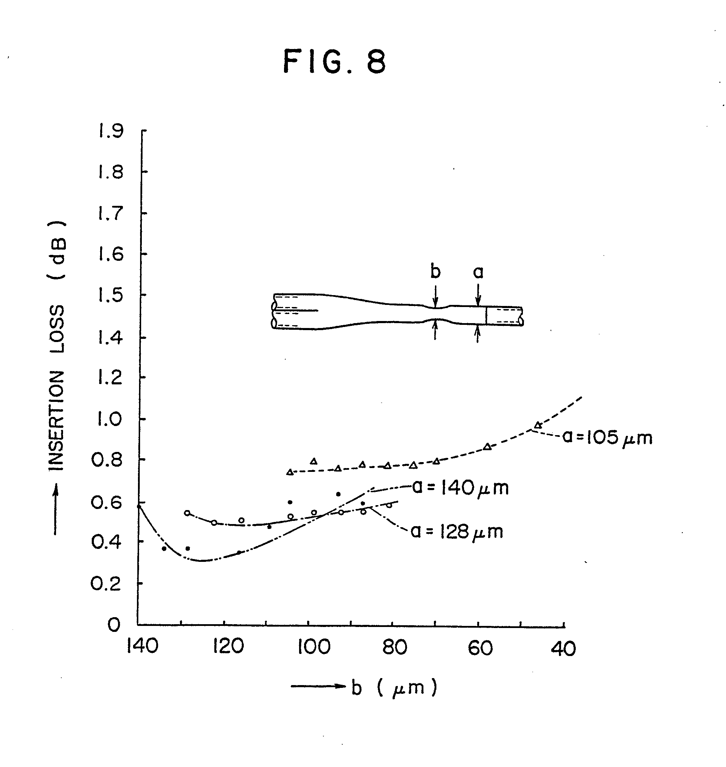

Insertion losses due to the optical fiber junction devices according to the embodiments shown in Figs. 3 through 7 were measured, and data on the measured insertion losses is shown in Fig. 8, in which $a$ indicates the outside diameter of the optical fiber end and $b$ the outside diameter of the constricted portion.

With the arrangement of the present invention, therefore, an optical fiber junction device has low transmission loss by providing a constricted portion in fused optical fibers to which another optical fiber is spliced for refracting light propagating in a central cladding layer into cores of the fused optical fibers.

Thus, there is provided in accordance with the invention an optical fiber junction device which has the advantage discussed above. The embodiments described are intended to be merely exemplary and those skilled in the art will be able to make variations and modifications in them without departing from the spirit and scope of the inventions. All such modifications and variations are contemplated as falling within the scope of the claims.

What is claimed is:

1. An optical fiber junction device comprising at least a pair of optical fibers fused at side faces to each other and having a combined end, and at least one other optical fiber and having an end having an outside diameter which is substantially the same as that of said combined end and joined to the latter, said at least pair of optical fibers fused together having a constricted portion adjacent to said combined end and having an outside diameter smaller than that of said combined end.

2. An optical fiber junction device according to claim 1, wherein said at least pair of optical fibers have different outside diameters, and one of the optical fibers which is of a smaller outside diameter has a portion from which the cladding material is removed and which is joined by fusion to the other optical fiber having a larger outside diameter.

1/3                    0109972

# FIG. 1
## PRIOR ART

# FIG. 2A
## PRIOR ART
# FIG. 2B
## PRIOR ART
# FIG. 2C
## PRIOR ART

# FIG. 3

# FIG.4B
# FIG.4A
# FIG.4C
# FIG. 4D
# FIG. 4E

# FIG. 5

# FIG. 6

# FIG. 7

FIG. 8

European Patent
Office

**EUROPEAN SEARCH REPORT**

0109972

Application number

EP 82 11 1040

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | PATENTS ABSTRACTS OF JAPAN, vol. 5, no. 88 (P65)[760], 9th June 1981, page 115 P 65 & JP - A - 56 35113 (TOKYO SHIBAURA DENKI K.K.) * Abstract * | 1 | G 02 B 7/26 |
| Y,D | US-A-4 083 625 (M.C. HUDSON) * Abstract; column 2, lines 38-57; figures 1-4 * | 1 | |
| A | PATENTS ABSTRACTS OF JAPAN, vol. 4, no. 107 (P-21)[589], 31st July 1980, page 135 P 21 & JP - A - 55 65908 (TOKYO SHIBAURA DENKI K.K.) 17-05-1980 | 1 | |
| A | DE-A-2 717 535 (SIEMENS AG.) * Claim 1; page 4, line 36 - page 5, line 18; figures 1-4 * | 1 | TECHNICAL FIELDS SEARCHED (Int. Cl. ³) G 02 B 7/26 G 02 B 5/16 H 04 B 9/00 G 02 B 27/10 C 03 B 37/14 |

The present search report has been drawn up for all claims

| Place of search THE HAGUE | Date of completion of the search 02-08-1983 | Examiner BEAVEN G.L. |
|---|---|---|